# EUROPÄISCHE PATENTSCHRIFT

(11) **EP 3 689 121 B1**
(45) Veröffentlichungstag und Bekanntmachung des Hinweises auf die Patenterteilung: **20.03.2024**
(21) Anmeldenummer: 19401054.2
(22) Anmeldetag: 17.12.2019
(51) Int. Cl.: A01C 7/04, A01C 7/06, A01C 7/08

(54) **SÄAGGREGAT, NACHRÜSTBAUSATZ FÜR SÄAGGREGAT UND EINZELKORNSÄMASCHINE MIT SÄAGGREGATEN**
SOWING UNIT, RETROFITTING KIT FOR SOWING UNIT AND SINGLE-GRAIN SOWING MACHINE WITH SOWING UNITS
MODULE DE SCIE, JEU DE MISE À NIVEAU POUR LE MODULE DE SCIE ET SEMOIR MONOGRAINE POURVU DE MODULES DE SCIE

(30) Priorität: 30.01.2019 DE 102019102257
(43) Veröffentlichungstag der Anmeldung: 05.08.2020
(73) Patentinhaber: Amazonen-Werke H. Dreyer SE & Co. KG, 49205 Hasbergen (DE)
(72) Erfinder: Mertens, Daniel, 26121 Oldenburg (DE); Koch, Jens, 29525 Uelzen (DE)

(56) Entgegenhaltungen:
- EP-A1- 3 335 535
- WO-A1-2005/011358
- WO-A1-2017/068458
- DE-A1- 3 826 397
- US-A1- 2018 014 456

## Beschreibung

Die Erfindung betrifft ein Säaggregat gemäß dem Oberbegriff des Patentanspruches 1, ein Nachrüstbausatz in einem Säaggregat gemäß dem Anspruch 9, eine Einzelkornsämaschine umfassend eine Mehrzahl von Säaggregaten gemäß Anspruch 14 sowie ein Verfahren nach dem Oberbegriff von Anspruch 15.

Gemeinhin sind Säaggregate für Einzelkornsämaschinen bekannt, die einen ersten Vorratsbehälter für Saatgut, sowie einen zweiten Vorratsbehälter für granulares Material, wie Dünger und/oder Saatgut, aufweisen. Nur beispielsweise sei hierzu auf die Seite 58 der Betriebsanleitung "Tempo V" der Firma Väderstad mit Druckvermerk vom 14.05.2018 verwiesen.

Solche Säaggregate umfassen ferner Bodenbearbeitungswerkzeuge zum Öffnen einer Säfurche, in die von einer Vereinzelungseinrichtung mittels einer von einem Gebläse erzeugten Druckdifferenz vereinzeltes Saatgut aus dem ersten Vorratsbehälter abgegeben wird. Die Druckdifferenz wirkt auf eine rotierend antreibbare Lochscheibe, wobei idealerweise an jedem Loch ein einzelnes Saatkorn anhaftet, welches durch Unterbrechen der Druckdifferenz von der Lochscheibe abgelöst und an die Bodenbearbeitungswerkzeuge abgegeben wird.

Das in dem zweiten Vorratsbehälter bevorratete granulare Material kann mittels einer Dosiervorrichtung in geregelten Mengen an eine Förderleitung abgegeben werden. Das granulare Material fließt in die Dosiervorrichtung, wo es durch ein drehend antreibbares Dosierrad dosiert wird. Unter dem Einfluss der Schwerkraft rieselt das dosierte granulare Material in die Förderleitung und von dort aus weiter in die Säfurche bevor die Säfurche von den Bodenbearbeitungswerkzeugen wieder mit Boden bedeckt wird, wie es auch in der WO 2017 0 68 458 A1 offenbart ist.

Insofern kann für das granulare Material aus dem zweiten Vorratsbehälter von einer Schwerkraftförderung zumindest in der Förderleitung gesprochen werden.

Nachteilig ist hierbei, dass die Führung der Förderleitung somit stark eingeschränkt ist. Die Förderleitung ist über ihre gesamte Förderstrecke mit ausreichend steilem Gefälle anzuordnen, um ein zuverlässiges Rieseln des dosierten granularen Materials zu ermöglichen. Die hinreichend steile Anordnung der Förderleitung wiederum bedingt, dass der Abgabeort aus der Förderleitung ungünstiger Weise direkt abhängig ist von der Positionierung der Dosiervorrichtung am Säaggregat bzw. dem zweiten Vorratsbehälter. Vorstehend geschilderte Restriktionen verhindern eine flexible Gestaltung des Säaggregates. Insbesondere die Anordnung des zweiten Vorratsbehälters mit zugeordneter Dosiervorrichtung und anschließender Förderleitung ist erschwert. Die Ausbringung von granularem Material ist somit negativ beeinträchtigt und wenig anpassungsfähig. Ferner ist die Auswahl ausbringbarer granularer Materialien aufgrund der Beschränkung den Abgabeort betreffend für den Landwirt limitiert.

Die der Erfindung zugrunde liegende Aufgabe besteht darin, die beschriebenen Nachteile des Standes der Technik zu beseitigen und insbesondere die Ausbringung von granularem Material zu verbessern.

Diese Aufgabe wird erfindungsgemäß durch die kennzeichnenden Merkmale des Anspruchs 1 gelöst.

Infolge dieser Maßnahme ist eine vielseitige, beispielsweise zumindest annährend waagerechte und/oder zumindest teilweise aufwärtsleitende Führung der Förderleitung ermöglicht. Dies ist der Ausbringung von granularem Material besonders zuträglich, da der Abgabeort aus der Förderleitung flexibel gestaltbar ist. So ist beispielsweise eine Abgabe von granularem Material außerhalb der Säfurche leicht umzusetzen. Bei dem granularen Material handelt es sich in der Regel um Dünger und/oder Saatgut, wie nur beispielsweise Grassamen, für dessen Ausbringung es zweckmäßig sein kann das Material flächig auf dem Boden zu verteilen.

Die Erfindung macht sich die Erkenntnis zunutze, dass zur Beaufschlagung der Vereinzelungseinrichtung mit der Druckdifferenz ein Gebläse zur Verfügung steht, welches zur Bereitstellung des Luftstroms an die Injektorvorrichtung genutzt werden kann. Es ist ebenso denkbar, dass für die Bereitstellung des Luftstroms zumindest ein separates Gebläse genutzt wird.

In einer vorteilhaften Weiterbildung des Säaggregates ist vorgesehen, dass aus der Vereinzelungseinrichtung durch die Beaufschlagung mit der Druckdifferenz ein, insbesondere mit Staubpartikeln und/oder Beizmitteln vermengter, Abluftstrom austritt, wobei das Säaggregat ein Abluftsystem umfasst, welches dazu eingerichtet ist den austretenden Abluftstrom einzufangen und mittels einer Abluftleitung der Injektorvorrichtung zuzuleiten, so dass der Luftstrom zumindest teilweise durch den eingefangenen Abluftstrom bereitgestellt ist.

Um die Vereinzelungseinrichtung mit der Druckdifferenz zur vereinzelten Abgabe von Saatgut zu beaufschlagen ist diese nahezu luft- und druckdicht ausgeführt. Zur Aufrechterhaltung der Druckdifferenz ist es dennoch nötig den kontaminierten Abluftstrom abzuführen. In besonders zweckmäßiger Weise wird durch diese Weiterbildung nicht nur die Umwelt vor dem Austreten der schädlichen Staubpartikel und Beizmittel geschont sondern auch der Luftstrom für die Injektorvorrichtung mit einfachen Mitteln bereitgestellt. Da es sich bei der Beaufschlagung der Vereinzelungseinrichtung um einen Überdruck gegenüber der Umwelt handelt, kann das Abluftsystem ohne aktive Komponenten geschaffen sein. Eine passive luftleitende Verbindung der Vereinzelungseinrichtung mit der Injektorvorrichtung mittels der Abluftleitung genügt, um den Abluftstrom über die Injektorvorrichtung gemeinsam mit dem granularen Material aus der Förderleitung strömen zu lassen. Durch bodennahes Ausströmen der Staub- und oder Beizpartikel ist deren schädliche Wirkung auf die Umwelt reduziert, so dass der Abluftstrom in zweckmäßiger Weise zumindest annährend unschädlich gemacht ist.

In einer weiteren besonders vorteilhaften Weiterbildung des Säaggregates ist vorgesehen, dass das Abluftsystem mittels einer Adaptereinheit dazu eingerichtet ist, an, vorzugsweise einer Öffnung, der Vereinzelungseinrichtung angeordnet zu werden und den austretenden Abluftstrom einzufangen. Die Adaptereinheit kann als Schnellverschlüsse ausgeführte Mittel zur lösbaren Befestigung des Abluftsystems an der Vereinzelungseinrichtung aufweisen. Die Vereinzelungseinrichtung kann eine zumindest zur Aufnahme der Adaptereinheit eingerichtete Abluftschnittstelle aufweisen. Die Adaptereinheit kann als zumindest annährend trichterförmiges Anschlussteil ausgeführt sein, so dass der Abluftstrom von der Vereinzelungseinrichtung in die Abluftleitung kanalisiert wird. Die Adaptereinheit schließt zumindest annährend luftdicht an die Vereinzelungseinrichtung an, so dass zum einen das ungewünschte Austreten von Abluft reduziert ist und zum anderen der Abluftstrom nahezu vollständig zur Beschleunigung des granularen Materials in der Förderleitung genutzt wird. Infolge dieser Weiterbildung ist das Abluftsystem besonders einfach und sicher gestaltet.

In einer weiteren vorteilhaften Weiterbildung umfasst das Abluftsystem zumindest ein Druckbegrenzungsventil. Vorzugsweise ist das Druckbegrenzungsventil zumindest annährend unmittelbar an der Vereinzelungseinrichtung angeordnet. Im Falle einer Verstopfung des Abluftsystems und/oder der Förderleitung entsteht ein Staudruck im Abluftsystem, der das Funktionsprinzip der Vereinzelungseinrichtung mittels der Druckdifferenz außer Kraft setzen könnte. Vorzugsweise ist das Druckbegrenzungsventil daher einstellbar und löst bei einem Druck im Abluftsystem aus, bei dem die Funktion der Vereinzelungseinrichtung sicherstellt ist. Der sich bildende Staudruck im Falle einer Fehlfunktion von Förderleitung und/oder Abluftsystem ist dann auf das am Druckbegrenzungsventil eingestellte Maß begrenzt. Vorzugsweise ist die Adaptereinheit als zumindest annährend trichterförmiges T-Stück ausgeführt, wobei das T-Stück die Vereinzelungseinrichtung mit der Abluftleitung einerseits und dem Druckbegrenzungsventil andererseits verbindet. Anhand dieser Weiterbildung ist das Säaggregat mit gesteigerter Funktionssicherheit der Vereinzelungseinrichtung, selbst bei Fehlfunktion des Abluftsystems und/oder der Förderleitung geschaffen.

Das Säaggregat ist ferner vorteilhaft dadurch weitergebildet, dass die Injektorvorrichtung den Luftstrom in eine Hauptströmungsrichtung bündelnd ausgeführt ist, wobei die Hauptströmungsrichtung zumindest annährend entlang der Längserstreckung des an die Injektorvorrichtung anschließenden Teils der Förderleitung weist. Um den der Injektorvorrichtung zuleitbaren Luftstrom möglichst optimal zur Beschleunigung des granularen Materials zu nutzen, ist es zweckmäßig, dass dieser mittels einer Querschnittsverjüngung in Form einer Treibdüse gebündelt wird. Durch Bündelung des Luftstroms in der Hauptströmungsrichtung erhöht sich dessen Luftgeschwindigkeit, wodurch sich die Fördereigenschaften verbessern. Ferner bewirkt die Ausrichtung der Hauptströmungsrichtung entlang der Mittelachse der Förderleitung, dass durch das Luft-Material-Gemisch bestehend aus Luftstrom und darin mitgerissenem granularem Material zumindest bei Eintritt in die Förderleitung reduzierte Reibungsverluste durch Kontakt mit den Wandungen entstehen.

Um das Anhaften von granularem Material und Staub desselbigen an der Injektorvorrichtung und/oder der Dosiervorrichtung zu reduzieren, ist in einer weiteren vorteilhaften Weiterbildung vorgesehen, dass die Injektorvorrichtung zumindest eine Spüldüse umfasst, wobei die Injektorvorrichtung mittels der Spüldüse den Luftstrom zumindest teilweise die Dosiervorrichtung umströmend leitend ausgeführt ist. Durch partielles Umleiten des Luftstroms zur Dosiervorrichtung hin wird der Taupunkt in der Dosiervorrichtung und der daran anschließenden Injektorvorrichtung angehoben. Hierdurch neigen insbesondere hygroskopische granulare Materialien wesentlich weniger dazu an den insbesondere umströmten Wandungen anzubacken, das heißt sich dort abzusetzen. Ferner wird durch die Spüldüsen ein Luftfilm erzeugt, der sich wie eine pneumatische Trennschicht an die Wandungen der Dosiervorrichtung und Injektorvorrichtung anlegt und so den Kontakt zwischen granularem Material und den Wandungen reduziert.

Das Säaggregat ist außerdem vorteilhaft dadurch weitergebildet, dass die Förderleitung mit ihrem offenen Ende beabstandet hinter den Bodenbearbeitungswerkzeugen mündend angeordnet ist. In dieser Weiterbildung ist vorgesehen, dass der Abgabeort des granularen Materials aus der Förderleitung hinter den Bodenbearbeitungswerkzeugen und somit oberhalb der geschlossenen Säfurche befindet, so dass granulares Material auf der Bodenoberfläche flächig ausgebracht werden kann. Besonders vorteilhaft ist hierbei, dass die Mündung der Förderleitung in einem Abstand, der vorzugsweise mindestens 15 cm beträgt, hinter den Bodenbearbeitungswerkzeugen liegt.

Granulares Material, das zur Ausbringung auf der Bodenoberfläche vorgesehen ist, wird infolge dieser Maßnahme zumindest annährend nicht mehr durch im Bereich der Bodenbearbeitungswerkzeuge auftretende Erdbewegungen verschüttet.

In einer weiteren vorteilhaften Weiterbildung weist die Förderleitung an ihrem offenen Ende eine, vorzugsweise als Prallteller ausgeführte, Verteileinrichtung auf. Durch die Verwendung einer Verteileinrichtung ist die, insbesondere flächige, Ausbringung von granularem Material weiter verbessert. Bei Ausführung der Verteileinrichtung als Prallteller trifft das in der Injektorvorrichtung entstehende Luft-Material-Gemisch nach Austreten aus der Förderleitung auf einen vorzugsweise quer zur Austrittsrichtung aus der Förderleitung, die im Wesentlichen der Fahrrichtung entspricht, angeordneten Prallteller. Von dem Prallteller wird das granulare Material abgelenkt, so dass ein Bereich um das offene Ende der Förderleitung mit granularem Material versorgt wird.

In einer besonders vorteilhaften Weiterbildung ist die Verteileinrichtung dazu eingerichtet, das entlang der Förderleitung beschleunigte granulare Material in Austrittsrichtung des granularen Materials aus der Förderleitung und/oder quer zur Austrittsrichtung des granularen Materials aus der Förderleitung zu verteilen. Infolge dieser Maßnahme wird eine definierte Längs- und/oder Querverteilung des granularen Materials erreicht. Dies ist besonders zweckmäßig, da das granulare Material aus dem zweiten Vorratsbehälter häufig in geringen Mengen ausgebracht wird und die Verteilcharakteristik somit von gesteigerter Bedeutung ist. Die Verteileinrichtung kann als Prallteller ausgebildet sein, wobei die Verteilung in und/oder quer zur Austrittsrichtung des granularen Materials aus der Förderleitung abhängig ist von der Geometrie des Pralltellers sowie dessen relativer Anordnung zur Austrittsrichtung.

Die der Erfindung zugrundeliegende Aufgabe wird ebenfalls durch die Merkmale des Anspruchs 9 gelöst.

Da seit neuerer Zeit empfindliche Umweltauflagen zur Unschädlichmachung des mit Staubpartikeln und/oder Beizmitteln vermengten Abluftstroms aus den Vereinzelungseinrichtungen der Säaggregate, insbesondere älterer, Sämaschinen seitens des Gesetzgebers bestehen, sind Landwirte dazu angehalten ihre Säaggregate nachzurüsten, um den Gesetzesauflagen nachzukommen. Infolge dieser Maßnahme ist eine Lösung geschaffen, die nicht nur eine Möglichkeit für Landwirte bietet, die Umweltauflagen mit einfach Mitteln zu erfüllen, sondern auch den Abluftstrom in zweckdienlicher Weise zur Verbesserung der Ausbringung von granularem Material aus der Förderleitung verwendet. Zweckmäßiger Weise ist die Abluftleitung nahezu luftdicht an der Vereinzelungseinrichtung angeordnet, so dass der Abluftstrom nicht frei in die Umwelt austritt. In der Förderleitung vermengt sich der Abluftstrom mit von der Dosiervorrichtung abgegebenem granularem Material und strömt am offenen Ende der Förderleitung bodennah aus. Aufgrund des besonders einfachen Aufbaus, ist der Nachrüstbausatz für nahezu alle Säaggregate geeignet. Der Nachrüstbausatz zeichnet sich anhand seiner modularen Bauweise folglich dadurch aus in nachträglich an Säaggregaten anbringbarer Weise den Abluftstrom zur aktiven Förderung von granularem Material einzusetzen und so die Umweltbelastung zu reduzieren.

In einer vorteilhaften Weiterbildung des Nachrüstbausatzes ist vorgesehen, dass das Abluftsystem eine Adaptereinheit zur, vorzugsweise werkzeuglosen, Anordnung an der Vereinzelungseinrichtung aufweist. Die Adaptereinheit kann als Schnellverschlüsse ausgeführte Mittel zur lösbaren Befestigung des Abluftsystems an der Vereinzelungseinrichtung aufweisen. Die Adaptereinheit kann als zumindest annährend trichterförmiges Anschlussteil ausgeführt sein, so dass der Abluftstrom von der Vereinzelungseinrichtung in die Abluftleitung kanalisiert wird. Die Adaptereinheit kann zur ihrer Anordnung an die Vereinzelungseinrichtung angepasst ausgebildet sein, wobei die Adaptereinheit gegen zumindest eine für zumindest eine andere Vereinzelungseinrichtung angepasste Adaptereinheit austauschbar ist. Diese Weiterbildung ist vorteilhaft zur schnellen und einfachen Anordnung des Abluftsystems an insbesondere unterschiedlich gearteten Vereinzelungseinrichtungen.

Der Nachrüstbausatz ist ferner vorteilhaft dadurch weitergebildet, dass das Abluftsystem eine Injektorvorrichtung zur, vorzugsweise werkzeuglosen, Anordnung zwischen der Dosiervorrichtung und der Förderleitung aufweist. Die Injektorvorrichtung umfasst vorzugsweise schnappverschlussartig ausgebildete Mittel zur lösbaren Befestigung an der Dosiervorrichtung. Die Injektorvorrichtung kann ein vorzugsweise einen Klemmmechanismus nutzendes Anschlussstück zur lösbaren Befestigung der Förderleitung aufweisen. Vorzugsweise umfasst die Injektorvorrichtung ein als Treibdüse ausgebildetes Düsenelement, dem der Abluftstrom zuleitbar ist, so dass das granulare Material in der Förderleitung in erhöhtem Maße beschleunigt wird. Die Ausbringung von granularem Material mit Hilfe des Nachrüstbausatzes ist so in vortrefflicher Weise verbessert.

In einer weiteren vorteilhaften Weiterbildung des Nachrüstbausatzes ist vorgesehen, dass die Injektorvorrichtung eine Spüldüse aufweist, wobei die Injektorvorrichtung mittels der Spüldüse den Luftstrom zumindest teilweise die Dosiervorrichtung umströmend leitend ausgeführt ist. Vorteilhaft ist hierbei, dass das Anhaften von granularem Material oder Staub desselbigen an der Dosiervorrichtung und/oder der Injektorvorrichtung reduziert ist.

Außerdem ist der Nachrüstbausatz vorteilhaft dadurch weitergebildet, dass das Abluftsystem zumindest ein Druckbegrenzungsventil umfasst. Infolge dieser Weiterbildung ist sichergestellt, dass in dem Abluftsystem kein Staudruck entsteht, welcher das Funktionsprinzip der Vereinzelungseinrichtung behindert.

Die der Erfindung zugrundeliegende Aufgabe wird außerdem durch eine Einzelkornsämaschine nach Anspruch 14 sowie durch ein Verfahren nach den kennzeichnenden Merkmalen des Anspruchs 15 gelöst. Bezüglich der Vorteile dieser Einzelkornsämaschine und dieses Verfahrens wird auf die Vorteile der unterschiedlichen Ausführungsformen des Säaggregates verwiesen.

Weitere Einzelheiten der Erfindung sind der Beispielsbeschreibung und den Zeichnungen zu entnehmen. Die Zeichnungen zeigen Einzelkornsämaschine wird auf die Vorteile der unterschiedlichen Ausführungsformen des Säaggregates verwiesen.

Weitere Einzelheiten der Erfindung sind der Beispielsbeschreibung und den Zeichnungen zu entnehmen. Die Zeichnungen zeigen
- Fig.1: eine hinter einem Ackerschlepper angeordnete als Einzelkornsämaschine ausgeführte Verteilmaschine mit einer Mehrzahl von Säaggregaten in perspektivischer Ansicht, und
- Fig.2: eines der Säaggregate in von der Einzelkornsämaschine demontiertem Zustand in perspektivischer Ansicht.

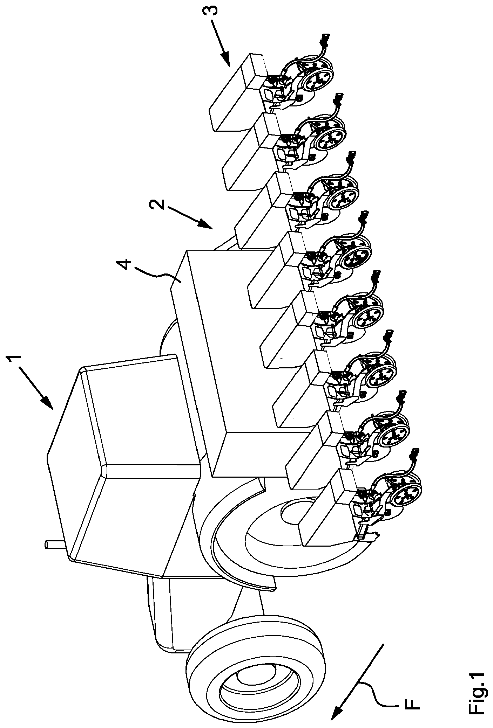

Eine hinter einem Ackerschlepper 1 angeordnete als Einzelkornsämaschine 2 ausgeführte Verteilmaschine mit einer Mehrzahl von quer zur Fahrtrichtung F angeordneten Säaggregaten 3 ist in Fig.1 zu sehen. Die Säaggregate 3 sind am hinteren Ende der Einzelkornsämaschine 2 nebeneinander an einem durch die Säaggregate 3 verdeckten Rahmen angeordnet. An seinem vorderen Ende umfasst die Einzelkornsämaschine 2 einen zentralen Tank 4 bspw. für granulares Material unter dem in verdeckter Weise ein Gebläse angeordnet ist. Das Gebläse ist über nicht dargestellte Schlauchleitungen mit den einzelnen Säaggregaten 3 verbunden und so dazu eingerichtet diese mit Druckluft zu versorgen.

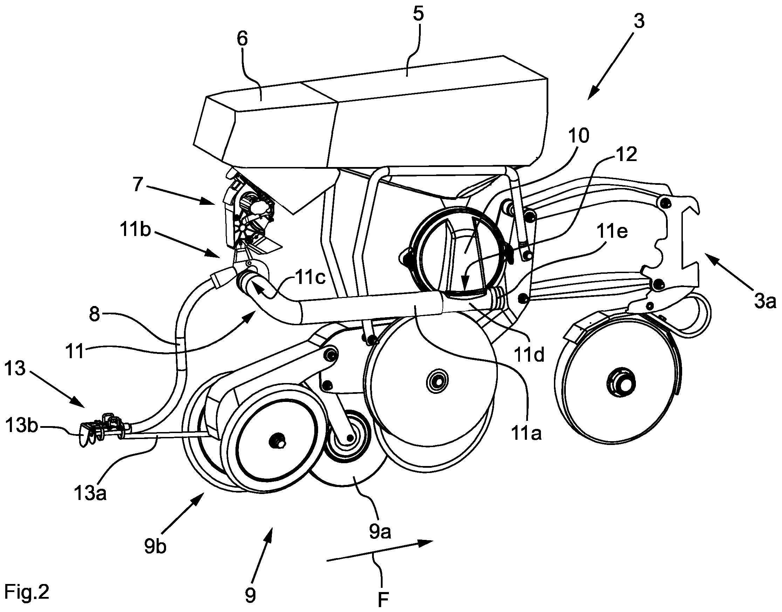

In Fig.2 ist eines der Säaggregate 3 in von der Einzelkornsämaschine 2 demontiertem Zustand gezeigt. An seinem in Fahrtrichtung F vorderen Ende weist das Säaggregat 3 einen Anbauflansch 3a auf, welcher dazu dient das Säaggregat 3 am Rahmen der Einzelkornsämaschine 2 zu befestigen. Ferner umfasst das Säaggregat 3 an seinem oberen Ende einen ersten als Saatgutbehälter 5 dienenden Vorratsbehälter zur Bevorratung von Saatgut, einen zweiten als Mikrogranulatbehälter 6 dienenden Vorratsbehälter zur Bevorratung von granularem Material, wie Dünger, Pestizide und/oder Saatgut, welchem eine Dosiervorrichtung 7 zur dosierten Abgabe von granularem Material in eine Förderleitung 8 zugeordnet ist und an seinem unteren Ende Bodenbearbeitungswerkzeuge 9 zum Öffnen und Schließen einer Säfurche.

Unterhalb des Saatgutbehälters 5 ist eine Vereinzelungseinrichtung 10 angeordnet. Diese Vereinzelungseinrichtung 10 wird über die nicht dargestellten Schlauchleitungen von dem Gebläse mit einer Druckdifferenz beaufschlagt und ist so in an sich bekannter und deswegen hier nicht näher erläuterter Weise zur vereinzelten Abgabe von aus dem Saatgutbehälter 5 in die Vereinzelungseinrichtung 10 rieselndem Saatgut in die Säfurche eingerichtet. Über eine verdeckte Saatgutleitung gelangen die vereinzelten Saatkörner in regelmäßigen Abständen in die Säfurche und werden dort von einer Andruckrolle 9a angedrückt, bevor die Säfurche von Furchenbedeckungsrollen 9b mit Boden behäufelt und so wieder geschlossen wird.

Da es sich bei der Beaufschlagung der Vereinzelungseinrichtung 10 um eine Beaufschlagung mit Druckluft handelt, tritt aus der Vereinzelungseinrichtung 10 funktions- bzw. prinzipbedingt ein mit an dem Saatgut anhaftenden Staubpartikeln und/oder Beizmitteln vermengter Abluftstrom aus. Dieser Abluftstrom ist schädlich für die Umwelt und wird nur zu einem geringen Anteil über die Saatgutleitung in die Säfurche geleitet, wo er unschädlich ist. Der größere Anteil wird von einem dem Säaggregat 3 zugeordnetem Abluftsystem 11 direkt an der Vereinzelungseinrichtung 10 eingefangen und strömt über eine Abluftleitung 11a zu einer Injektorvorrichtung 11b.

Die Injektorvorrichtung 11b stellt das Verbindungsstück zwischen der Dosiervorrichtung 7, welche aus dem Mikrogranulatbehälter 6 rieselndes granulares Material in einstellbaren Mengen abgibt, und der Förderleitung 8 dar. Die Injektorvorrichtung 11b weist einen Lufteinlass 11c auf, über den der Injektorvorrichtung 11b ein Luftstrom zuleitbar ist. Die Injektorvorrichtung 11b ist so ausgebildet, dass sie den zugebrachten Luftstrom bündelt und in die Förderleitung 8 richtet, so dass mit dem Luftstrom vermischtes von der Dosiervorrichtung 7 abgegebenes granulares Material in der Förderleitung 8 beschleunigt wird. Bei diesem Säaggregat ist die Abluftleitung 11a mit dem Lufteinlass 11c verbunden, so dass der der Injektorvorrichtung 11b zubringbare Luftstrom durch den von dem Abluftsystem 11 an der Vereinzelungseinrichtung 10 eingefangenen Abluftstrom bereitgestellt wird. In umweltschonender Weise wird der Abluftstrom so zur Beschleunigung des granularen Materials in der Förderleitung 8 genutzt bevor er, für die Umgebung nahezu unschädlich, bodennah ausströmt.

Die Vereinzelungseinrichtung 10 weist eine im Wesentlichen als Öffnung ausgebildete Abluftschnittstelle 12 auf, welche dafür vorgesehen ist, dass der Abluftstrom gezielt aus der Vereinzelungseinrichtung 10 entweichen kann. Das Abluftsystem 11 umfasst eine Adaptereinheit 11d mittels der es nahezu luftdicht an der Abluftschnittstelle 12 angeordnet ist. Die quasi luftdichte Verbindung zwischen Vereinzelungseinrichtung 10 und Abluftsystem 11 über das Zusammenwirken von Abluftschnittstelle 12 und Adaptereinheit 11d ermöglicht es den austretenden Abluftstrom einzufangen und zumindest annährend vollständig zu nutzen, um das granulare Material mittels der Injektorvorrichtung 11b in der Förderleitung 8 zu beschleunigen. Hierzu ist die Abluftleitung 11a an die Adaptereinheit 11d angeschlossen und verbindet diese mit dem Lufteinlass 11c der Injektorvorrichtung 11b. Die Adaptereinheit 11d weist als Schnappverschlüsse ausgebildete Mittel zur werkzeuglosen Anordnung an der Abluftschnittstelle 12 auf und ist zerstörungsfrei demontierbar.

Das Abluftsystem 11 umfasst ferner ein Druckbegrenzungsventil 11e. Das Druckbegrenzungsventil 11e ist an der der Abluftleitung 11a abgewandten Seite der Adaptereinheit 11d angeordnet und verhindert bei Verstopfung des Abluftsystems 11 oder stromabwärts des Abluftsystems 11 angeordneter Komponenten einen Ausfall der Vereinzelungseinrichtung 10. Für die Funktion der Vereinzelungseinrichtung 10 ist es notwendig, dass der Abluftstrom möglichst ohne Staudruck zu erzeugen austreten kann. Daher ist das Druckbegrenzungsventil 11e so eingestellt, dass es bei einem Staudruck öffnet, der über dem verlustfreien Abströmen durch das Abluftsystem 11 liegt, um leichte Verschmutzungen bspw. in der Abluftleitung 11a zu berücksichtigen, aber dennoch die Funktion der Vereinzelungseinrichtung 10 ermöglicht.

Wie Fig.2 zeigt, weist die Injektorvorrichtung 11b vom Lufteinlass 11c aus eine geschwungene und sich verjüngende Form auf, so dass ein zugeleiteter Luftstrom in einer Hauptströmungsrichtung gebündelt, also in seiner Geschwindigkeit erhöht und in seiner Richtung fokussiert, wird. Die Hauptströmungsrichtung ist mittels der Injektorvorrichtung 11b so ausgerichtet, dass sie zumindest annährend entlang des sich anschließenden Teils der Förderleitung 8 weist. Dies hat den Vorteil, dass mitgerissenes granulares Material in verringertem Maße in Kontakt mit den Wandungen der Förderleitung 8 kommt und so reduzierte Reibungsverluste auftreten.

Ferner umfasst die Injektorvorrichtung 11b in seinem Inneren eine Spüldüse, mittels der ein Teil des zugeleiteten Luftstroms abgezweigt und umgeleitet wird. Die Spüldüse dient dazu die Dosiervorrichtung 7 und insbesondere den Bereich zu umströmen in dem sich der Luftstrom mit dem granularen Material mischt, um das Anhaften von Staub des granularen Materials an den Wandungen zu verhindern.

Nachdem das granulare Material sich mit dem Luftstrom vermischt hat wird es entlang der Förderleitung 8 beschleunigt und so zu dem offenen Ende der Förderleitung 8 gefördert. Die Förderleitung 8 dieses Säaggregates 3 mündet mit seinem offenen Ende in Fahrtrichtung F beabstandet hinter dem Bearbeitungswerkzeugen 9 und weist eine als Prallteller 13 ausgeführte Verteileinrichtung für granulares Material auf. Der Prallteller 13 wird von einer Strebe 13a gehalten, welche zwischen den Furchenbedeckungsrollen 9b am Säaggregat 3 befestigt ist. Der entlang der Förderleitung 8 strömende Mischstrom aus granularem Material und beschleunigtem Abluftstrom trifft auf eine sich quer zur Fahrtrichtung F erstreckende und gegenüber einer Vertikalen leicht geneigte Verteilplatte 13b. Von der Verteilplatte 13b prallt das beschleunigte granulare Material ab und verteilt sich statistisch in Austrittsrichtung und quer zur Austrittsrichtung aus der Förderleitung 8, so dass das granulare Material auf der Bodenoberfläche eines zu bearbeitenden Feldes flächig verteilt wird.

Das vorstehend beschriebene Abluftsystem 11 umfassend die Abluftleitung 11a, Injektorvorrichtung 11b, Lufteinlass 11c, Adaptereinheit 11d und Druckbegrenzungsventil 11e kann in einer nicht gezeigten Ausführungsform als Nachrüstbausatz ausgeführt sein. Über die Adaptereinheit 11d und die Injektorvorrichtung 11b lässt sich ein solcher Nachrüstbausatz vorzugsweise werkzeuglos zwischen einer Vereinzelungseinrichtung 10 und der Dosiervorrichtung 7 eines nahezu beliebigen Säaggregates 3 anordnen, um einen aus der Vereinzelungseinrichtung 10 austretenden Abluftstrom einzufangen und in vorteilhafter Weise nahezu unschädlich zu machen. Bezüglich der Vorteile und Modifikationen eines solchen Nachrüstbausatzes wird auf die Vorteile und Modifikationen des Abluftsystems 11 verwiesen.

Selbstverständlich ist jedes der in Fig. 1 gezeigten quer zur Fahrtrichtung F nebeneinander angeordneten Säaggregate 3 der Einzelkornsämaschine 2 nach der in Fig.2 gezeigten Ausführungsform ausgestattet. Es ist ebenso denkbar, dass die Säaggregate 3 nur eine Grundausstattung oder einen Teil der Modifikationen aufweisen.

### Bezugszeichenliste

- 1: Ackerschlepper
- 2: Einzelkornsämaschine
- F: Fahrtrichtung
- 3: Säaggregat
- 3a: Anbauflansch
- 4: Tank
- 5: Saatgutbehälter
- 6: Mikrogranulatbehälter
- 7: Dosiervorrichtung
- 8: Förderleitung
- 9: Bodenbearbeitungswerkzeuge
- 9a: Andruckrolle
- 9b: Furchenbedeckungsrolle
- 10: Vereinzelungseinrichtung
- 11: Abluftsystem
- 11a: Abluftleitung
- 11b: Injektorvorrichtung
- 11c: Lufteinlass
- 11d: Adaptereinheit
- 11e: Druckbegrenzungsventil
- 12: Abluftschnittstelle
- 13: Prallteller
- 13a: Strebe
- 13b: Verteilplatte

## Patentansprüche

1. Säaggregat (3) für eine Einzelkornsämaschine (2) umfassend:
- einen ersten Vorratsbehälter (5) zur Bevorratung von Saatgut,
- Bodenbearbeitungswerkzeuge (9) zum Öffnen und Schließen einer Säfurche,
- zumindest eine mittels einer von einem Gebläse erzeugten Druckdifferenz zur vereinzelten Abgabe von Saatgut aus dem Vorratsbehälter (5) in die Säfurche eingerichteten Vereinzelungseinrichtung (10),
- zumindest einen zweiten Vorratsbehälter (6) zur Bevorratung von granularem Material,
- zumindest eine Dosiervorrichtung (7) zur dosierten Abgabe von granularem Material aus dem zweiten Vorratsbehälter (6) in eine Förderleitung (8), **dadurch gekennzeichnet, dass** die Förderleitung (8) über eine Injektorvorrichtung (11b) mit der Dosiervorrichtung (7) verbunden ist, und der Injektorvorrichtung (11b) über einen Lufteinlass (11c) ein Luftstrom zuleitbar ist, wobei das granulare Material mittels des durch die Injektorvorrichtung (11b) gerichteten Luftstroms in der Förderleitung (8) beschleunigt ist wobei aus der Vereinzelungseinrichtung (10) durch die Beaufschlagung mit der Druckdifferenz ein, insbesondere mit Staubpartikeln und/oder Beizmitteln vermengter, Abluftstrom austritt, dass das Säaggregat (3) ein Abluftsystem (11) umfasst, welches dazu eingerichtet ist den austretenden Abluftstrom einzufangen und mittels einer Abluftleitung (11a) der Injektorvorrichtung (11b) zuzuleiten, so dass der Luftstrom zumindest teilweise durch den eingefangenen Abluftstrom bereitgestellt ist.

2. Säaggregat (3) nach Anspruch 1, **dadurch gekennzeichnet, dass** das Abluftsystem (11) mittels einer Adaptereinheit (11d) dazu eingerichtet ist, an, vorzugsweise einer Öffnung (12), der Vereinzelungseinrichtung (10) angeordnet zu werden und den austretenden Abluftstrom einzufangen.

3. Säaggregat (3) nach zumindest einem der vorstehenden Ansprüche, **dadurch gekennzeichnet, dass** das Abluftsystem (11) zumindest ein Druckbegrenzungsventil (11e) umfasst.

4. Säaggregat (3) nach zumindest einem der vorstehenden Ansprüche, **dadurch gekennzeichnet, dass** die Injektorvorrichtung (11b) den Luftstrom in eine Hauptströmungsrichtung bündelnd ausgeführt ist, dass die Hauptströmungsrichtung zumindest annährend entlang der Längserstreckung des an die Injektorvorrichtung (11b) anschließenden Teils der Förderleitung (8) weist.

5. Säaggregat (3) nach zumindest einem der vorstehenden Ansprüche, **dadurch gekennzeichnet, dass** die Injektorvorrichtung (11b) zumindest eine Spüldüse umfasst, dass die Injektorvorrichtung (11b) mittels der Spüldüse den Luftstrom zumindest teilweise die Dosiervorrichtung (7) umströmend leitend ausgeführt ist.

6. Säaggregat (3) nach zumindest einem der vorstehenden Ansprüche, **dadurch gekennzeichnet, dass** die Förderleitung (8) mit ihrem offenen Ende beabstandet hinter den Bodenbearbeitungswerkzeugen (9) mündend angeordnet ist.

7. Säaggregat (3) nach zumindest einem der vorstehenden Ansprüche, **dadurch gekennzeichnet, dass** die Förderleitung (8) an ihrem offenen Ende eine, vorzugsweise als Prallteller (13) ausgeführte, Verteileinrichtung (13) aufweist.

8. Säaggregat (3) nach Anspruch 7, **dadurch gekennzeichnet, dass** die Verteileinrichtung (13) dazu eingerichtet ist, das entlang der Förderleitung (8) beschleunigte granulare Material in Austrittsrichtung des granularen Materials aus der Förderleitung (8) und/oder quer zur Austrittsrichtung des granularen Materials aus der Förderleitung (8) zu verteilen.

9. Nachrüstbausatz angeordnet an einem Säaggregat (3), wobei das Säaggregat (3) eine durch ein Gebläse mit einer Druckdifferenz beaufschlagte Vereinzelungseinrichtung (10) und zumindest einen zweiten Vorratsbehälter (6) zur Bevorratung von granularem Material mit zugeordneter Dosiervorrichtung (7) umfasst, wobei der Nachrüstbausatz ein Abluftsystem (11) umfasst, welches mittels einer Abluftleitung (11a) einer Injektorvorrichtung dazu eingerichtet ist einen aus der Vereinzelungseinrichtung (10) austretenden Abluftstrom einzufangen und einer an die Dosiervorrichtung (7) anschließenden Förderleitung (8) zuzuführen, so dass von der Dosiervorrichtung (7) in die Förderleitung (8) abgegebenes Material beschleunigt wird.

10. Nachrüstbausatz nach Anspruch 9, **dadurch gekennzeichnet, dass** das Abluftsystem (11) eine Adaptereinheit (11d) zur, vorzugsweise werkzeuglosen, Anordnung an der Vereinzelungseinrichtung (10) aufweist.

11. Nachrüstbausatz nach zumindest einem der vorstehenden Ansprüche 9 oder 10, **dadurch gekennzeichnet, dass** das Abluftsystem (11) eine Injektorvorrichtung (11b) zur, vorzugsweise werkzeuglosen, Anordnung zwischen der Dosiervorrichtung (7) und der Förderleitung (8) aufweist.

12. Nachrüstbausatz nach Anspruch 11, **dadurch gekennzeichnet, dass** die Injektorvorrichtung (11b) eine Spüldüse aufweist, dass die Injektorvorrichtung (11b) mittels der Spüldüse den Luftstrom zumindest teilweise die Dosiervorrichtung (7) umströmend leitend ausgeführt ist.

13. Nachrüstbausatz nach zumindest einem der vorstehenden Ansprüche 9 bis 11, **dadurch gekennzeichnet, dass** das Abluftsystem (11) zumindest ein Druckbegrenzungsventil (11e) umfasst.

14. Einzelkornsämaschine (2) mit einer Mehrzahl von Säaggregaten (3), **dadurch gekennzeichnet, dass** die Säaggregate (3) nach zumindest einem der Ansprüche 1 bis 8 ausgeführt sind.

15. Verfahren zur vereinzelten Abgabe von aus einem Saatgutbehälter (5) in eine Vereinzelungseinrichtung (10) rieselnden Saatgut, umfassend die Schritte
- Beaufschlagen der Vereinzelungseinrichtung (10) mit Druckluft,
- Austreten eines mit am dem Saatgut anhaftenden Staubpartikeln und/oder
Beizmitteln vermengten Abluftstroms aus der Vereinzelungseinrichtung (10), **gekennzeichnet durch** die Schritte
- Einfangen eines Abluftstroms von einem dem Säaggregat zugeordneten Abluftsystem (11) direkt an der Vereinzelungseinrichtung (10),
- Zuleiten des eingefangenen Abluftstroms über eine Abluftleitung (11a) zu einer Injektorvorrichtung (11b).

## Claims

1. Sowing unit (3) for a single-grain seed drill (2) comprising:
- a first storage container (5) for storing seed,
- soil cultivation tools (9) for opening and closing a sowing furrow,
- at least one separating device (10) designed for the individual dispensing of seed from the storage container (5) into the sowing furrow by means of a pressure difference generated by a fan,
- at least one second storage container (6) for storing granular material,
- at least one metering device (7) for the metered dispensing of granular material from the second storage container (6) into a delivery line (8),
**characterized in that**
the delivery line (8) is connected to the metering device (7) via an injector device (11b), and an air flow can be supplied to the injector device (11b) via an air inlet (11c), wherein the granular material is accelerated in the delivery line (8) by the air flow directed through the injector device (11b), wherein an exhaust air flow, in particular mixed with dust particles and/or dressing agents, exits the separating device (10) due to the application of the pressure difference, **in that** the sowing unit (3) comprises an exhaust air system (11), which is designed to capture the exiting exhaust air flow and to supply it to the injector device (11b) by means of an exhaust air line (11a), so that the air flow is at least partially provided by the captured exhaust air flow.

2. Sowing unit (3) according to claim 1, **characterized in that** the exhaust air system (11) is designed, by means of an adapter unit (11d), to be arranged on the separating device (10), on preferably an opening (12) of the separating device, and to capture the exiting exhaust air flow.

3. Sowing unit (3) according to at least one of the preceding claims, **characterized in that** the exhaust air system (11) comprises at least one pressure limiting valve (11e).

4. Sowing unit (3) according to at least one of the preceding claims, **characterized in that** the injector device (11b) is designed to concentrate the air flow in a main flow direction, **in that** the main flow direction points at least approximately along the longitudinal extent of the part of the delivery line (8) adjoining the injector device (11b).

5. Sowing unit (3) according to at least one of the preceding claims, **characterized in that** the injector device (11b) comprises at least one flushing nozzle, **in that** the injector device (11b) is designed, by means of the flushing nozzle, to conduct the air flow in a manner flowing at least in part around the metering device (7).

6. Sowing unit (3) according to at least one of the preceding claims, **characterized in that** the delivery line (8) is arranged so that its open end opens at a distance behind the soil cultivation tools (9).

7. Sowing unit (3) according to at least one of the preceding claims, **characterized in that** the delivery line (8) has at its open end a distribution device (13) that is preferably designed as a baffle plate (13).

8. Sowing unit (3) according to claim 7, **characterized in that** the distribution device (13) is designed to distribute the granular material accelerated along the conveying line (8) in the exiting direction of the granular material from the delivery line (8) and/or transversely to the exiting direction of the granular material from the delivery line (8).

9. Retrofitting kit arranged on a sowing unit (3), wherein the sowing unit (3) comprises a separating device (10) to which a pressure difference is applied by a fan, and at least one second storage container (6) for storing granular material and having an associated metering device (7), wherein the retrofitting kit comprises an exhaust air system (11), which is designed, by means of an exhaust air line (11a) of an injector device,
to capture an exhaust air flow exiting the separating device (10) and to supply it to a delivery line (8) adjoining the metering device (7), so that material dispensed from the metering device (7) into the delivery line (8) is accelerated.

10. Retrofitting kit according to claim 9, **characterized in that** the exhaust air system (11) comprises an adapter unit (11d) to be arranged on the separating device (10), preferably without tools.

11. Retrofitting kit according to at least one of the preceding claims 9 or 10, **characterized in that** the exhaust air system (11) has an injector device (11b) to be arranged, preferably without tools, between the metering device (7) and the delivery line (8).

12. Retrofitting kit according to claim 11, **characterized in that** the injector device (11b) has a flushing nozzle, **in that** the injector device (11b) is designed, by means of the flushing nozzle, to conduct the air flow in a manner flowing at least in part around the metering device (7).

13. Retrofitting kit according to at least one of the preceding claims 9 to 11, **characterized in that** the exhaust air system (11) comprises at least one pressure limiting valve (11e).

14. Single-grain seed drill (2) comprising a plurality of sowing units (3), **characterized in that** the sowing units (3) are designed according to at least one of claims 1 to 8.

15. Method for the individual dispensing of seeds trickling from a seed container (5) into a separating device (10), comprising the steps of
- applying compressed air to the separating device (10),
- exiting of an exhaust air flow mixed with dust particles and/or dressing agents adhering to the seed from the separating device (10), **characterized by** the steps of
- capturing an exhaust air flow from an exhaust air system (11) assigned to the sowing unit directly on the separating device (10),
- supplying the captured exhaust air flow via an exhaust air line (11a) to an injector device (11b).

## Revendications

1. Groupe de semis (3) destiné à un semoir monograine (2) comprenant :
- un premier récipient de stockage (5) permettant le stockage de semences,
- des outils de travail du sol (9) permettant d'ouvrir et de fermer un sillon de semis,
- au moins un appareil de séparation (10) conçu pour distribuer les semences séparément, à partir du récipient de stockage (5), dans le sillon de semis au moyen d'une différence de pression générée par une soufflante,
- au moins un second récipient de stockage (6) permettant le stockage de matière granulaire,
- au moins un dispositif de dosage (7) permettant de distribuer de la matière granulaire de manière dosée depuis le second récipient de stockage (6) dans une conduite de transport (8), **caractérisé en ce que**
la conduite de transport (8) est reliée au dispositif de dosage (7) par l'intermédiaire d'un dispositif d'injection (11b), et un écoulement d'air peut être amené au dispositif d'injection (11b) par l'intermédiaire d'une entrée d'air (11c), dans lequel la matière granulaire est accélérée dans la conduite de transport (8) au moyen de l'écoulement d'air dirigé à travers le dispositif d'injection (11b), dans lequel un écoulement d'air évacué, en particulier mélangé à des particules de poussière et/ou à des agents corrosifs, sort de l'appareil de séparation (10) en raison de l'exposition à la différence de pression, **en ce que** le groupe de semis (3) comprend un système d'évacuation d'air (11) qui est conçu pour capter l'écoulement d'air évacué sortant et l'amener au dispositif d'injection (11b) au moyen d'une conduite d'évacuation d'air (11a), de sorte que l'écoulement d'air est fourni au moins partiellement par l'écoulement d'air évacué capté.

2. Groupe de semis (3) selon la revendication 1, **caractérisé en ce que** le système d'évacuation d'air (11) est conçu pour être disposé, au moyen d'une unité d'adaptation (11d), sur l'appareil de séparation (10), de préférence une ouverture (12) de celui-ci, et pour capter l'écoulement d'air évacué sortant.

3. Groupe de semis (3) selon au moins l'une des revendications précédentes, **caractérisé en ce que** le système d'évacuation d'air (11) comprend au moins une soupape de limitation de pression (11e).

4. Groupe de semis (3) selon au moins l'une des revendications précédentes, **caractérisé en ce que** le dispositif d'injection (11b) est réalisé de manière à concentrer l'écoulement d'air dans une direction d'écoulement principale, **en ce que** la direction d'écoulement principale est orientée au moins approximativement le long de l'extension longitudinale de la partie de la conduite de transport (8) qui se raccorde au dispositif d'injection (11b).

5. Groupe de semis (3) selon au moins l'une des revendications précédentes, **caractérisé en ce que** le dispositif d'injection (11b) comprend au moins une buse de rinçage, **en ce que** le dispositif d'injection (11b) est réalisé de manière à mener l'écoulement d'air au moyen de la buse de rinçage en contournant au moins partiellement le dispositif de dosage (7).

6. Groupe de semis (3) selon au moins l'une des revendications précédentes, **caractérisé en ce que** la conduite de transport (8) est disposée avec son extrémité ouverte de manière à déboucher à une certaine distance derrière les outils de travail du sol (9).

7. Groupe de semis (3) selon au moins l'une des revendications précédentes, **caractérisé en ce que** la conduite de transport (8) présente à son extrémité ouverte un appareil de répartition (13), de préférence réalisé en tant que plateau de déviation (13).

8. Groupe de semis (3) selon la revendication 7, **caractérisé en ce que** l'appareil de répartition (13) est conçu pour répartir la matière granulaire accélérée le long de la conduite de transport (8) dans la direction de sortie de la matière granulaire hors de la conduite de transport (8) et/ou transversalement à la direction de sortie de la matière granulaire hors de la conduite de transport (8).

9. Kit de mise à niveau disposé sur un groupe de semis (3), dans lequel le groupe de semis (3) comprend un appareil de séparation (10) exposé à une différence de pression par une soufflante et au moins un second récipient de stockage (6) permettant de stocker de la matière granulaire et comportant un dispositif de dosage (7) associé, dans lequel le kit de mise à niveau comprend un système d'évacuation d'air (11) qui est conçu pour, au moyen d'une conduite d'évacuation d'air (1 1a) d'un dispositif d'injection,
capter un écoulement d'air évacué sortant de l'appareil de séparation (10) et le guider vers une conduite de transport (8) raccordée au dispositif de dosage (7), de sorte que la matière distribuée par le dispositif de dosage (7) dans la conduite de transport (8) est accélérée.

10. Kit de mise à niveau selon la revendication 9, **caractérisé en ce que** le système d'évacuation d'air (11) présente une unité d'adaptation (11d) permettant la disposition, de préférence sans outil, sur l'appareil de séparation (10).

11. Kit de mise à niveau selon au moins l'une des revendications précédentes 9 ou 10, **caractérisé en ce que** le système d'évacuation d'air (11) présente un dispositif d'injection (11b) permettant la disposition, de préférence sans outil, entre le dispositif de dosage (7) et la conduite de transport (8).

12. Kit de mise à niveau selon la revendication 11, **caractérisé en ce que** le dispositif d'injection (11b) présente une buse de rinçage, **en ce que** le dispositif d'injection (11b) est réalisé de manière à mener l'écoulement d'air au moyen de la buse de rinçage en contournant au moins partiellement le dispositif de dosage (7).

13. Kit de mise à niveau selon au moins l'une des revendications précédentes 9 à 11, **caractérisé en ce que** le système d'évacuation d'air (11) comprend au moins une soupape de limitation de pression (11e).

14. Semoir monograine (2) comportant une pluralité de groupes de semis (3), **caractérisé en ce que** les groupes de semis (3) sont réalisés selon au moins l'une des revendications 1 à 8.

15. Procédé permettant la distribution séparée de semences se déversant d'un récipient à semences (5) dans un appareil de séparation (10), comprenant les étapes consistant à
- exposer l'appareil de séparation (10) à de l'air comprimé,
- faire sortir un écoulement d'air évacué mélangé à des particules de poussière et/ou à des agents corrosifs adhérant à la semence hors de l'appareil de séparation (10), **caractérisé par** les étapes consistant à
- capter un écoulement d'air évacué d'un système d'évacuation d'air (11) associé au groupe de semis directement au niveau de l'appareil de séparation (10),
- amener l'écoulement d'air évacué capté à un dispositif d'injection (11b) par l'intermédiaire d'une conduite d'évacuation d'air (11a).
